# EUROPEAN PATENT APPLICATION

(11) **EP 2 030 815 A1**
(43) Date of publication of application: **04.03.2009**
(21) Application number: 08163393.5
(22) Date of filing: 01.09.2008
(51) Int. Cl.: B60G 21/05, B60G 7/00, B60G 9/00, B60G 11/46

(54) **Wheel axle suspension with plastic spring arm**

(30) Priority: 31.08.2007 NL 1034316
(71) Applicant: Weweler Nederland B.V., 7332 AP Apeldoorn (NL)
(72) Inventor: BRAMER, Hans, 6961 WR, EERBEEK (NL)
(74) Representative: Houben, Christiaan Hein Willem Frans

(57) **Abstract**

The invention relates to a method for manufacturing a fibre-reinforced spring arm (3,103,203) with an integral axle body (5) of a wheel axle for a vehicle such as a lorry or a lorry trailer. The spring arm is constituted essentially from fibre material layers and a plastic resin, wherein the spring arm on a front side is provided with one or more cylindrical members adapted to receive a hinge pin (4,104) in a mounted state under a vehicle chassis (1) so as to hingedly connect the spring arm with the vehicle chassis. The axle body extends on a rear side of the spring arm. A plurality of fibre material layers are put around a portion of the length of the axle body, after which the plastic resin cures whereby a sleeve is formed around the axle body which is connected integrally with the axle body.

## Description

The invention relates to a wheel axle suspension for a vehicle, in particular a lorry or a trailer. Such a wheel axle suspension comprises an axle body and a pair of suspension brackets, also known as spring carrier arms, fitted on the vehicle chassis on either side of the vehicle, to which suspension brackets a longitudinal bearing arm is hingedly connected in each case. Such longitudinal bearing arms are referred to in the art as "trailing arms". Furthermore, the wheel axle suspension comprises on either side an air spring which is active between the axle body and the vehicle chassis and is usually connected to the trailing arm.

Such wheel axle suspensions are known. In a particular type of wheel axle suspension the trailing arm is in the form of a spring arm. The spring action of the trailing arm produces resistance to the rolling movement about the longitudinal axis of the vehicle. In practice, such trailing arms are usually made of steel by rolling. The wheel axle is then clamped against the trailing arm by means of clamping means. An example of such a wheel axle suspension is disclosed in EP 1 273 464.

EP 1 308 265 discloses a spring-mounted trailing arm made of plastic in a comparable form to that of the steel spring arm of EP 1 273 464, in which the axle body is clamped against the trailing arm. This known trailing arm is composed of a number of parallel layers of fibre-reinforced plastic.

EP 1 486 359 discloses a composite trailing arm which is manufactured from tapes of fibre material with plastic resin therein. In the trailing arm an opening for an axle body is left open. The axle body is afterwards passed through the opening and fixed with an adhesive. Furthermore the openings in the axle body can have a non-circular shape, e.g. an oval shape, so as to prevent rotation of the axle body with respect to the trailing arm.

WO 2006/119101, in particular Figs 13 to 15 of that publication, discloses a wheel axle suspension with spring arms made of plastic which are hingedly connected to suspension brackets, in which the axle body is not clamped against the spring arms, but is surrounded by a sleeve moulded integrally with the rear end of each of the spring arms. The spring arm has a constant sectional profile in a longitudinal section. The plastic trailing arm shown is manufactured by pultrusion. The axle body is inserted through the sleeve after manufacturing of the trailing arm and is secured to the sleeve by means of a wringing fit, adhesive bond and/or by means of bolts to the sleeve.

The invention has for an object is to propose an alternative method to provide a trailing arm for a wheel axle suspension.

This object is achieved according to the invention by a method according to claim 1. In the method according to the invention a spring arm of fibre reinforced plastic with an integral axle body is manufactured. The spring arm is therein constituted essentially from fibre material layers and a plastic resin, wherein the spring arm on a front side is provided with one or more cylindrical members adapted to receive a hinge pin in a mounted state under a vehicle chassis so as to hingedly connect the spring arm with the vehicle chassis. The axle body extends on a rear side of the spring arm. A plurality of fibre material layers are put around a portion of the length of the axle body at that rear side after which the plastic resin cures whereby a sleeve is formed around the axle body which is connected integrally with the axle body.

An important aspect in the manufacturing of wheel axle suspensions for lorries and trailers is fixing the axle body with respect to the trailing arm(s) such that rotation of the axle body with respect to the trailing arm is resisted.

During manufacturing of the trailing arm, according to the invention the (metal) axle body is wrapped in fibre material, e.g. fibre mats, after which the plastic resin can cure and the axle body is integrally connected to the trailing arm. An advantage of this is that it is avoided that the axle body has to be fixed to the plastic trailing arm afterwards by means of an adhesive which is a difficult process to control. It is also avoided that mechanical connecting means are necessary to fix the axle body or that non-circular axle cross sections have to be applied, which in view of operational loads are less favourable than axles with a circular cross section.

Preferably the sleeve is formed around a central portion of the axle body, wherein with particular preference the sleeve is formed over at least half of the length of the axle body. The axle body is enclosed over a sufficient length by this measure and is thus fixed to a sufficiently large surface of the sleeve to resist rotation of the axle body with respect to the sleeve. Furthermore, the embedding over a sufficiently great length in the centre of the vehicle causes torsional forces to be prevented, which torsional forces occur when one applies two separate trailing arms that are arranged on either side of the vehicle and that are both connected to the axle body.

Preferably, a mould is used for forming the spring arm in manufacturing the trailing arm. The axle body is positioned in the mould after which mats of fibre material and resin are laid in the mould and can be laid around the axle body. Next, the entire structure is heated after which the resin cures and the trailing arm obtains its final shape and forms an integral unit with the axle body.

Preferably the one or more cylindrical members are integrally formed with the spring arm by putting fibre material layers around a pin shaped member after which the plastic resin cures and the one or more cylindrical members are formed. The pin shaped member can be laid in the mould to form the cylindrical members is removed afterwards. With particular preference two cylindrical members are formed on the front side of the spring arm, wherein the pin shaped members are removed after the spring arm is formed.

Preferably a front edge s formed on the spring arm, which front edge extends between the two cylindrical members, wherein fibre material layers, seen in a longitudinal section, are put as a loop around the edge such that a rounded edge is formed. This has for an advantage that the layers in the spring arm are covered and thus cannot separate from each other, for instance because they are knocked into. Such a problem is conceivable in the structure that is shown in Fig. 7 of US 2006/0244234.

Preferably, the front edge of the spring arm is made curve-shaped. Thereby, material can be saved, while still a sufficient roll resistance and resistance against transverse forces is provided.

It is possible to provide the axle body with a locking protrusion on its periphery, which locking protrusion is embedded in the fibre-reinforced plastic of the sleeve of the spring arm during fabrication of the spring arm, for obtaining additional locking of the axle body against rotation with respect to the trailing arm. Preferably the locking protrusion extends in the direction of the fibre layers of the fibre-reinforced plastic.

Furthermore it is possible to roughen the outer surface of the axle body before forming the spring arm so as to obtain a better adhesion of the sleeve to the axle body and prevent rotation of the axle body with respect to the sleeve in use.

Preferably, a plastic air spring mounting part and/or a shock absorber mounting part is integrally formed on the plastic spring arm.

Preferably a plastic support part for an axle lift is integrally formed on the front side of the spring arm, where in use an actuator of an axle lift can be supported.

Preferably, an air spring mounting part and/or a shock absorber mounting part is provided on the axle body before the fibre material layers are put around the axle body, which air spring mounting part and/or shock absorber mounting part extends through the sleeve after forming of the sleeve.

The invention furthermore relates to a wheel axle suspension according to claim 14.

The longitudinal trailing arm of the wheel axle suspension according to the invention has a spring body that absorbs the transverse forces in horizontal direction that are exerted on the wheel axle. The spring body of the longitudinal trailing arm according to the invention has such a stiffness that resistance is produced to the rolling movement of the vehicle about the longitudinal axis. Furthermore, the axle body is subjected to considerably lower torsional forces than is the case with the known suspension constructions, because the axle body according to the invention is embedded over the greater part of the length in the plastic of the sleeve.

The front end of the spring arm is preferably provided with one or more integrally moulded-on cylindrical members in which at least one hinge pin is accommodated, which hinge pin is fixed on the suspension brackets.

In a preferred embodiment the spring carrier brackets each comprise two side plates situated at a distance from each other and extending substantially in the longitudinal direction of the vehicle, which side plates are provided with fixing holes for a hinge pin to be run through, and the front end of the spring arm is provided with two cylindrical members, which each fit between the side plates of the corresponding spring carrier bracket, a hinge pin being run through each of the cylindrical members and the fixing holes in the side plates of the corresponding spring carrier bracket. In practice, vehicle undercarriages are produced in large numbers and the spring carrier brackets are fixed on them in the same place. For known wheel axle suspensions with two longitudinal trailing arms fitted on either side of the vehicle, these spring carrier brackets have two side plates between which a spring eye is placed. The preferred embodiment mentioned here has the advantage that the plate-type plastic spring arm can be fixed on a chassis that is also suitable for wheel axle suspensions with two parallel spring arms.

In a further preferred embodiment an opening is provided between the cylindrical members in the plate, which opening is preferably bounded by an arcuate edge extending between the cylindrical members. In this way material can be saved, while good rolling resistance and resistance to transverse forces is still provided.

In another preferred embodiment the spring carrier brackets each comprise a single plate extending substantially in the longitudinal direction of the vehicle, which plate is provided with a fixing hole for running through a hinge pin. In this preferred embodiment the front end of the spring arm is furthermore provided with a cylindrical member extending between the spring carrier arms, through which cylindrical member a single hinge pin extends, the free ends of the hinge pin each being run through the fixing hole in the plate of the corresponding spring carrier bracket.

In a further preferred embodiment the hinge pin is connected to the plastic of the one or more cylindrical members, and a bearing bush through which the corresponding end of the hinge pin is run is provided on the spring carrier brackets.

The hole in the plate of the spring carrier bracket is preferably a slotted hole that is open towards an edge of the spring carrier bracket plate. This makes it possible to fit the spring arm with the single through-running hinge pin on the spring carrier brackets already fixed on the chassis.

Further preferred embodiments of the invention will emerge in the description that follows with reference to the drawing, in which:
Fig. 1 a and Fig. 1 b show in a view in perspective and in a side view a preferred embodiment of a wheel axle suspension according to the invention,
Fig. 2 shows in a view in perspective another preferred embodiment of a wheel axle suspension according to the invention,
Fig. 3 shows a longitudinal section of a possible spring arm for a wheel axle suspension according to the invention,
Fig. 4 shows a longitudinal section of another possible spring arm for a wheel axle suspension according to the invention,
Fig. 5a and Fig. 5b show a view in perspective and a half rear view of a spring carrier bracket with a strut for the wheel axle suspension of Fig. 1 a and Fig. 1 b fixed on it,
Fig. 6 shows a rear view of a half of a wheel axle suspension of Fig. 1 a and Fig. 1b provided with an axle lift,
Fig. 7 shows a side view of a part of the wheel axle suspension of Fig. 6,
Fig. 8 shows a side view of a part of another preferred embodiment of a wheel axle suspension according to the invention,
Fig. 9 shows a side view of yet another preferred embodiment of a wheel axle suspension according to the invention,
Fig. 10 shows a side view of again another preferred embodiment of a wheel axle suspension according to the invention,
Fig. 11 shows a view in perspective of an axle body for the wheel axle suspension of Fig. 8,
Fig. 12 shows a top view of a wheel axle suspension according to the invention of a driven axle,
Fig.13 shows an example of a conventional spring carrier bracket with two side plates, and
Fig. 14 shows a longitudinal section in the centre of the trailing arm of Fig. 2.

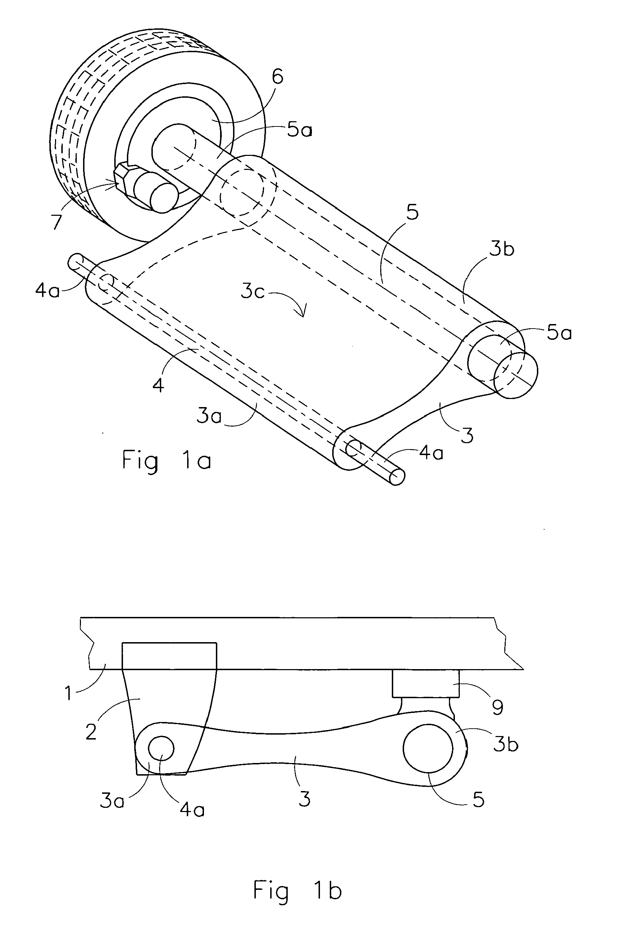

Figs 1 a and 1 b illustrate a first preferred embodiment of a wheel axle suspension according to the invention. In Fig. 1b a chassis beam 1 of a vehicle is visible in a side view, to which chassis beam a spring carrier bracket 2 is fixed. On either side of the vehicle is a metal spring carrier bracket 2. The spring carrier bracket 2 can be connected to the chassis beam 1, for example by means of welding, by means of a bolted connection, or by means of another suitable connecting method. The wheel axle suspension according to this embodiment has a spring trailing arm 3, which is in the form of a spring body 3c extending over the greater part of the width of the vehicle. The spring trailing arm 3 is made of a fibre-reinforced plastic. The trailing arm is manufactured from, e.g. mats of fibre material in which plastic resin is absorbed, which resin, after heating and curing, interconnects the layers of fibre material. It is also conceivable to add resin to the fibre material layers to interconnect them. The fibre material mats may contain randomly oriented fibres. It is also possible to work with fibre mats with a certain fibre orientation. The trailing arm 3 that is shown in the figure has a constant thickness in the transverse direction of the vehicle and a varying thickness in the longitudinal direction of the vehicle. However, it is also possible to give the trailing arm a varying thickness in the transverse direction. There may be provided stiffening ribs in the spring arm by providing locally more fibre material.

At the front end of the trailing arm 3 the plastic is wrapped around a through-running hinge pin 4, so that a cylindrical member 3a through which the hinge pin 4 extends is formed. The plastic and the hinge pin 4 are immovably fixed to each other. The hinge pin 4 has on either side free ends 4a, which are each hingedly connected to a spring carrier bracket 2.

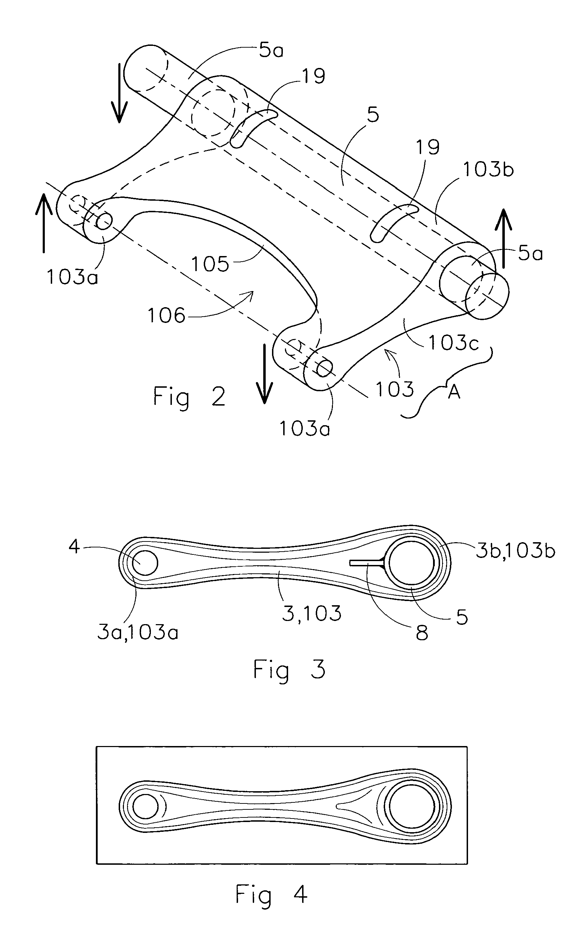

At the rear end of the trailing arm 3 fibre material layers (e.g. mats) are wrapped around an axle body 5, in this case a hollow axle body with a circular cross section. Wrapping the fibre mats around the axle body 5 provides a fibre-reinforced plastic sleeve around the axle body 5 on the rear end of the trailing arm 3 after curing of the accompanying resin, which sleeve surrounds the axle body 5 over the greater part of the axle length. As is shown on one side in Fig. 1 a, wheels 6 are fitted on the ends 5a of the axle body 5 that are free of plastic, which wheels may be provided with a braking device 7. The plastic of the sleeve 3b is immovably connected to the axle body 5, so that any undesirable rotation of the axle body 5 relative to the sleeve 3b, as a result of, for example, braking moments exerted upon the axle, is prevented. In order to obtain better resistance to the undesirable rotation of the axle body 5 in the sleeve 3b, the external surface of the axle body 5 can be roughened before the plastic is wound around it. It is also possible to provide a locking projection 8 on the external surface of the axle body 5, for example by welding, as shown in Fig. 3, in order to secure the axle body against rotation in the plastic of the longitudinal trailing arm 3. The locking projection preferably extends in the direction of the fibre layers of the spring plate 3, so that there is sufficient sturdiness to prevent the rotational forces upon the axle.

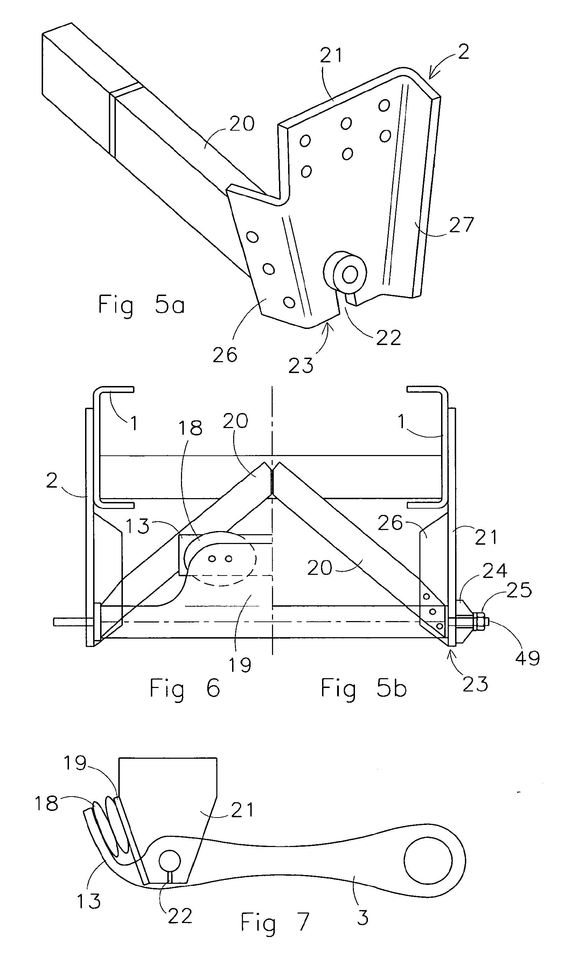

In the case of the trailing arm 3 shown in Fig. 1a, a spring carrier bracket 2 comprising a plate 21 is used, as can best be seen in Fig. 5a and Fig. 5b. The spring carrier bracket plate 21 is laid against the chassis beam 1 (see Fig. 5b) and is connected to it by means of welding, bolted-, riveted connections or in another way. A slotted opening 22, which is open towards the lower edge 23 of the plate 21, is provided on the underside of the plate 21. The ends 4a of the hinge pin 4 can be slid from the underside into the slotted openings 22 of the spring carrier brackets 2 fitted on either side of the vehicle. The ends 4a of the hinge pin are preferably threaded. A bearing bush 24 is fitted over the ends 4a of the hinge pin 4 and clamped against the outside of the plate 21 of the spring carrier bracket 2 by means of a nut 25. The plate 21 can have a flange 26 against which a strut 20 can be fixed. A flanged edge 27 can also be provided on the other side in order to provide the spring carrier bracket 2 with sufficient stiffness.

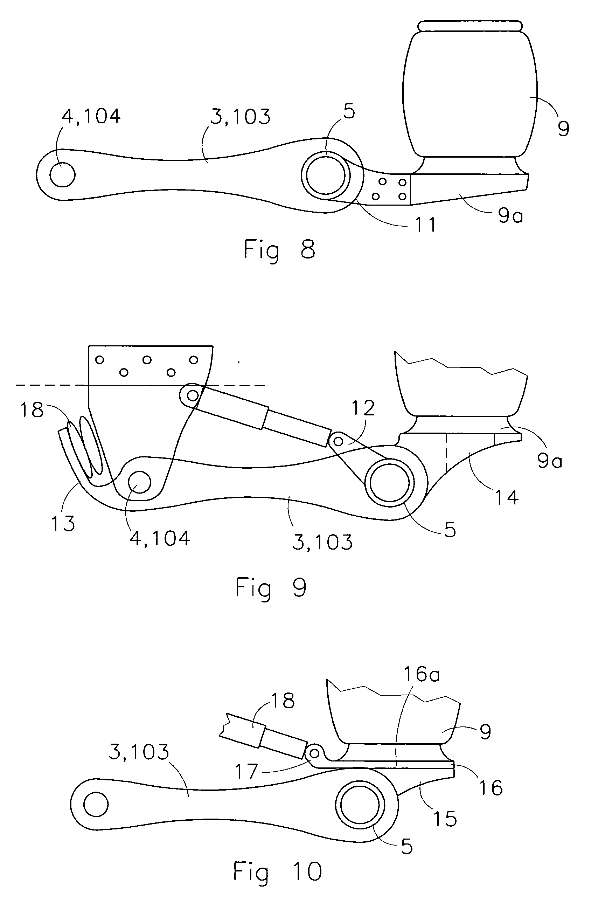

As can be seen in Fig. 1b, directly above the axle body an air spring 9, also known as bellows, is fitted on the sleeve 3b. The air spring 9 engages with its upper side on the vehicle chassis. Figs 8 - 11 show a number of alternatives for connecting the air spring 9 to the axle body.

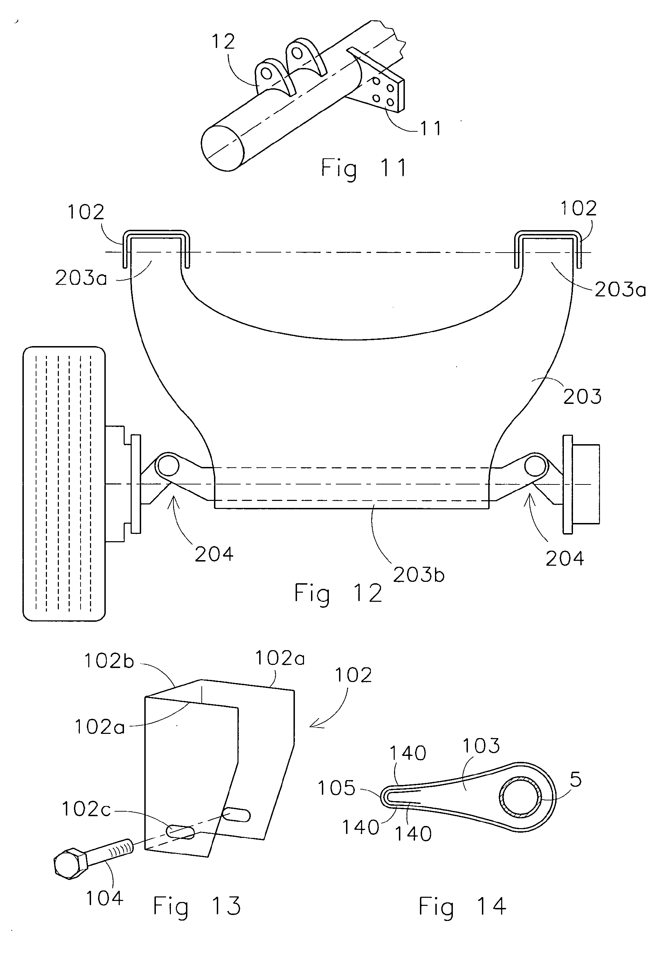

For instance, Fig. 8 and Fig. 11 show that a radially extending mounting flange 11 is provided, preferably welded, on the outside of the axle body 5. The underside 9a of the air spring 9 is screwed against said flange 11 or fixed to it in another way. The mounting flange 11 can extend radially outwards through openings 19 in the sleeve 3a, as shown in Fig. 2. As an alternative, it is possible to provide the mounting flange 11 in the plastic-free end region 5a of the axle body 5.

Fig. 9 shows a plastic bellows seat 14 moulded on integrally with the sleeve 3b of the trailing arm 3. The underside of the air spring 9 is mounted with bolts or the like against said bellows seat 14. Fig. 10 also shows a bellows seat 15 moulded on integrally with the sleeve 3b of the trailing arm 3, where, next to the air spring 9, a shock absorber mounting part 16 is also connected to said arm. The shock absorber mounting part 16 comprises, for example, a plate 16a, which is fitted between the bellows seat 15 and the underside of the air spring 9. Furthermore, the shock absorber mounting part 16 comprises a set of mounting lugs 17 that are connected to the plate 16a, between which mounting lugs a fixing eye of a shock absorber 18 is placed and hingedly connected. The shock absorber 18 can also be connected to the axle body 5 by means of a set of mounting lugs 12 that are fitted, preferably welded, on the outside of the axle body 5, as shown in Fig. 9 and Fig. 12. Said mounting lugs 12, like the mounting flange 11, are fitted on the axle body 5 before the axle body 5 is wrapped with plastic. The mounting lugs 12 can extend through an opening in the plastic of the sleeve 3b of the trailing arm 3, but they may, if desired, also be situated in the plastic-free end region 5a of the axle body 5.

It is also possible to provide a supporting part 13 on the front side of the trailing arm, against which supporting part an axle lift actuator 18, in this case, for example, in the form of a bellows, rests, as shown in Fig. 7 and Fig. 9. The other side of the axle lift actuator 18 preferably rests against a supporting plate 19 fitted against a strut 20 of the wheel axle suspension, as shown in Fig. 6 and Fig. 7. The supporting part 13 is preferably moulded on as an integral part.

Fig. 2 illustrates another preferred embodiment of a wheel axle suspension according to the invention. The trailing arm is indicated by reference numeral 103. In this figure the parts corresponding to the parts mentioned in the description above are indicated by the same reference numerals.

The wheel axle suspension according to this embodiment has a spring trailing arm 103 in the form of a spring body 103c extending over the greater part of the width of the vehicle. The spring trailing arm 103 is made of a fibre-reinforced plastic. The trailing arm 103 may be manufactured like the trailing arm 3 from e.g. mats of fibre material in which is dispersed plastic resin, which after heating and curing interconnects the fibre material layers in the final shape. It is also conceivable to add resin to the fibre material layers to interconnect them. Also other manufacturing methods, in which the fibre material is put directly around the axle body, are possible within the scope of the invention. The fibre mats preferably comprise short fibres with random fibre orientation. It is also possible to use fibre mats with a certain fibre orientation.

At the rear end of the trailing arm 103 the layers of fibre material are wrapped around an axle body 5, in this case a hollow axle body with a circular cross section. Wrapping the fibre material around the axle body 5 provides for a sleeve 103b formed on the rear end of the trailing arm 103 after curing of the accompanying plastic resin, which sleeve surrounds the axle body 5 over the greater part of the axle length. Wheels 6 are fitted on the ends 5a of the axle body 5 that are free of plastic. The plastic of the sleeve 103b is immovably connected to the axle body 5, so that any undesirable rotation of the axle body 5 relative to the sleeve 103b, as a result of, for example, braking moments exerted upon the axle, is prevented. In order to obtain better resistance in the sleeve 103b to the undesirable rotation of the axle body 5, the external surface of the axle body 5 can be roughened before the plastic is wound around it. It is also possible to provide, for example to weld, a locking projection 8 on the external surface of the axle body 5, as shown in Fig. 3, in order to secure the axle body 5 against rotation in the plastic of the trailing arm 103.

Two cylindrical fixing eyes 103a are moulded onto the front side of the trailing arm 103. Said fixing eyes can be formed by winding the fibre material around a pin and letting the accompanying resin cure, after which the pin is removed. It is also conceivable that the cylindrical members are formed as a solid member at first instance and are provided with a bore after curing of the resin. A resilient bearing bush, also known as a silent block, is preferably provided in the cylindrical fixing eyes 103a, as is also the case with conventional steel springs.

A recess 106 is preferably provided between the cylindrical members 103a in the body 103c of the spring arm 103, which recess 106 is bounded by an arcuate edge 105, which extends in the plane of the spring body 103c between the cylindrical members 103a. In particular it is preferred to form the front edge 105 by folding fibre material layers 140, seen in longitudinal section, as a loop around the edge 105 such that an edge results which is shown in Fig. 14.

The embodiment of the plate-shaped spring arm 103 shown in Fig. 2 has the advantage that it can be used in undercarriages of vehicles, for example trailers, where a conventional wheel axle suspension with steel spring arms is also used. In practice, the undercarriages are manufactured separately from the wheel axle suspensions, and when the undercarriage is being manufactured the spring carrier brackets 102 are fitted on it, so that the undercarriage with the spring carrier bracket 102 can be provided with a protective coating. It is preferable not to fit the spring carrier bracket 102 afterwards, and in particular not to weld the spring carrier bracket 102 on the undercarriage afterwards, because the coating becomes damaged. These spring carrier brackets 102 (see Fig. 13) each comprise two substantially parallel side plates 102a extending substantially in the longitudinal direction of the vehicle. The side plates 102a may be connected by a connecting plate 102b if desired. The side plates 102a are provided with fixing holes 105 for running through a hinge pin 104. The hinge pin 104 in the case illustrated is a hinge bolt. During the fitting, the fixing eye 103a is placed between the side plates 102a of the spring carrier bracket 102, the fixing eye 103a being placed in line with the fixing holes 105 in the side plates. The hinge bolt 104 is then run through them, and the whole unit is clamped by screwing a nut on the hinge bolt 104 and tightening it. The side plates 102 in this case rest against the head ends of the bearing bush (not shown), which is fitted in the fixing eye 103 and projects slightly relative to it.

A trailing arm of the type shown in Fig. 2 can also be used to suspend a driving axle from a set of spring carrier brackets 102 for a non-driven axle, as shown in Fig. 12. This figure shows a spring arm 203 in which the rear end is of a lower width, so that room is provided for the steering stub axle 204 of the driven axle 205. Fixing eyes 203b are provided on the front end at the same track width as the fixing eyes 103b of the embodiment of Fig. 2.

An advantage of the spring arms according to the present invention is that, in combination with the fact that the spring arm extends over the greater part of the width of the vehicle, the material is extremely suitable for relatively free shaping. This makes it possible to adapt the shape to make room for other parts of the wheel axle suspension. For instance, an recess can be provided to make room for a brake cylinder. It is also possible to vary the width of the spring arm, as shown in Fig. 12, to make room for the steering stub axles 204 of a driven axle 205.

It is pointed out that air spring mounting, shock absorber mounting and supporting parts for an axle lift in the trailing arm 103 are achieved in a way similar to the way in which this is achieved for the trailing arm 3.

In the case of the spring arms described above the spring arm has a thickness curve in the longitudinal direction. However, it is also conceivable to make the spring arm have a substantially constant thickness in the longitudinal direction of the vehicle, as is shown in Fig. 4. The stiffness of the spring trailing arm then varies in the longitudinal direction through the fact that, viewed in the longitudinal direction, the fibre density in the spring arm varies.

## Claims

1. Method for manufacturing a fibre-reinforced spring arm (3, 103, 203) with an integral axle body (5) of a wheel axle for a vehicle such as a lorry or a lorry trailer,
wherein the spring arm (3, 103, 203) is constituted essentially from fibre material layers and a plastic resin, wherein the spring arm (3, 103, 203) on a front side is provided with one or more cylindrical members (3a, 103a, 203a) adapted to receive a hinge pin (4, 104) in a mounted state under a vehicle chassis (1) so as to hingedly connect the spring arm (3, 103, 203) with the vehicle chassis, and
wherein the axle body (5) extends on a rear side of the spring arm (3, 103, 203) and a plurality of fibre material layers are put around a portion of the length of the axle body (5), after which the plastic resin cures whereby a sleeve (3b, 103b, 203b) is formed around the axle body which is connected integrally with the axle body (5).

2. Method according to claim 1, wherein the sleeve (3b, 103b, 203b) is formed around a central portion of the axle body (5).

3. Method according to claim 2, wherein the sleeve (3b, 103b, 203b) is formed over at least half of the length of the axle body (5).

4. Method according to one of the preceding claims, wherein a mould is used for forming the spring arm (3, 103, 203).

5. Method according to one of the preceding claims, wherein the one or more cylindrical members (3a, 103a, 203a) are integrally formed with the spring arm by putting fibre material layers around a pin shaped member after which the plastic resin cures and the one or more cylindrical members (3a, 103a, 203a) are formed.

6. Method according to claim 5, wherein two cylindrical members (103a, 203a) are formed on the front side of the spring arm (103, 203), wherein, preferably, the pin shaped members are removed after the spring arm is formed.

7. Method according to claim 6, wherein a front edge (105) is formed on the spring arm (103), which front edge extends between the two cylindrical members (103a), wherein fibre material layers, seen in a longitudinal section, are put as a loop around the edge (105) such that a rounded edge is formed.

8. Method according to claim 7, wherein the front edge (105) of the spring arm (103) is made curve-shaped.

9. Method according to one of the preceding claims, wherein the axle body (5) is provided with a locking protrusion (8) on its periphery, which locking protrusion (8) is embedded in the fibre-reinforced plastic of the sleeve (3b, 103b) of the spring arm during fabrication of the spring arm, for locking the axle body against rotation, wherein the locking protrusion (8) preferably extends in the direction of the fibre layers of the fibre-reinforced plastic.

10. Method according to one of the preceding claims, wherein the outer surface of the axle body (5) is roughened before forming the spring arm (3, 103, 203) so as to prevent rotation of the axle body (5) with respect to the sleeve (3b, 103b, 203b) in use.

11. Method according to one of the preceding claims, wherein a plastic air spring mounting part (14, 15) and/or a shock absorber mounting part is integrally formed on the plastic spring arm (3, 103).

12. Method according to one of the preceding claims, wherein a plastic support part (13) for an axle lift is integrally formed on the front side of the spring arm (3, 103).

13. Method according to one of the preceding claims, wherein an air spring mounting part and/or a shock absorber mounting part is provided on the axle body (5) before the fibre material layers are put around the axle body, which air spring mounting part (11) and/or shock absorber mounting part (12) extends through the sleeve (3b, 103b, 203b) after forming of the sleeve.

14. Wheel axle suspension for a vehicle, in particular a lorry or a lorry trailer, comprising a fibre reinforced trailing arm (3, 103, 203) with an integral axle body (5) manufactured by a method according to one of the preceding claims, a pair of spring carrier brackets (2, 102) each provided on either of the sides of the vehicle chassis (1), by which the spring arm (3, 103, 203) on its front side is hingedly connected to either of the sides of the vehicle chassis (1), and an air spring (9) which is operational between the axle body (5) and the vehicle chassis (1).

15. Wheel axle suspension according to claim 14, wherein the spring carrier brackets (102) each comprise two spaced apart side plates (102a) which extend essentially in the longitudinal direction of the vehicle and which are provided with mounting holes (102c) for running through a hinge pin (104), and wherein the front end of the spring arm (103, 203) is provided with two cylindrically shaped members (103a, 203a), which each fit between the side plates (102a) of the corresponding spring carrier bracket (102), wherein a hinge pin (104) is run through each of the cylindrically shaped members (103a, 203a) and the mounting holes (102c) in the side plates (102a) of the corresponding spring carrier bracket (102), and wherein, a resilient bearing bush is preferably provided in the cylindrical members (103a, 203a) where the hinge pin (104) is run through.
